# EUROPÄISCHE PATENTSCHRIFT

(11) **EP 0 454 713 B1**
(45) Veröffentlichungstag und Bekanntmachung des Hinweises auf die Patenterteilung: **31.03.1993**
(21) Anmeldenummer: 90901811.1
(22) Anmeldetag: 12.01.1990
(51) Int. Cl.: F16K 3/30, F16K 3/12, F16K 3/22

(54) **HUBVENTIL**
GATE VALVE
ROBINET A SOUPAPE

(30) Priorität: 21.01.1989 DE 3901695
(43) Veröffentlichungstag der Anmeldung: 06.11.1991
(73) Patentinhaber: KSB Aktiengesellschaft, 67227 Frankenthal (DE)
(72) Erfinder: ILLY, Alois, D-6703 Limburgerhof (DE); RUCKERT, Heinz-Jürgen, D-6711 Gro niedesheim (DE)
(86) Internationale Anmeldenummer: EP9000067
(87) Internationale Veröffentlichungsnummer: WO9008276

(56) Entgegenhaltungen:
- DE-C- 934 735
- FR-A- 975 736
- FR-A- 2 266 069
- GB-A- 2 146 742

## Beschreibung

Die Erfindung betrifft ein Hubventil gemäß dem Oberbegriff des Hauptanspruches.

Ein derartiges Ventil ist aus der FR-A-2 266 069 bekannt. Um den Verschlußkeil innerhalb des einteiligen Gehauses montieren zu können, weist es die Besonderheit auf, daß von den beiden Anschlußstutzen, zwischen denen der Schieberkeil dichtend anzuordnen ist, nur einer mit einem Sitzring ausgestattet ist. Die den Sitzring haltenden Gehäuseteile sowie der Sitzring verengen den Strömungsquerschnitt, der kleiner als die Nennweite der Armatur ausgebildet ist. Diese Teile fehlen am gegenüberliegenden Stutzen, wodurch der Einschub des Schieberkeiles in das Gehäuse möglich wird. Um aber eine Anpreßkraft des Schieberkeiles gegen den Sitzring zu erhalten, ist der ohne Sitzring gestaltete Druckstutzen mit zwei quer zur Strömungsrichtung angeordneten, einander gegenüberliegenden Rampen versehen. Diese wirken mit entsprechenden Vorsprüngen am Schieberkeil zusammen, um so eine Anpreßkraft in der Schließstellung zu erhalten. Die Rampen müssen eine Abmessung aufweisen, die zum einen eine sichere Anpressung und zum anderen ein Hindurchführen des Schieberkeiles und dessen Verbindung mit der Antriebsspindel ermöglichen.

Da für die Montage das Verschlußstück kleiner als der Querschnitt der Anschlußöffnungen ausgebildet sein muß, ist folglich der entsprechende Sitzquerschnitt vergleichsweise klein und das Verhältnis Anschlußquerschnitt des Armaturengehäuses zum Sitzquerschnitt äußerst ungünstig. Zusammen mit den notwendigen vorspringenden Rampen ergibt sich so ein schlechter Strömungsbeiwert Zeta.

Der Erfindung liegt die Aufgabe zugrunde, für Hubventile ein wesentlich besseres Verhältnis zwischen Durchströmquerschnitt und Sitzquerschnitt zu erreichen und dies bei gleichzeitig verbesserten Durchströmeigenschaften. Die Lösung dieser Aufgabe wird in überraschender Weise dadurch gelöst, daß der Ventilsitz unrund, insbesondere oval, ausgebildet ist und ein damit zusammenwirkendes Verschlußstück eine derart unrunde Dichtfläche aufweist, deren größte Erstreckung größer als die größte Erstreckung des der Montage dienenden Querschnitts der Anschlußöffnung ist. Hiermit ist zwischen Anschlußquerschnitt, der dem Nennweitenquerschnitt entspricht, und Sitzquerschnitt ein Verhältnis von 1:1 möglich. In Verbindung mit der schrägen Anordnung der Sitzfläche ergibt sich somit ein äußerst vorteilhafter Strömungsbeiwert, welcher deutlich weniger als die Hälfte eines normalen Ventils beträgt und damit erhebliche Energieeinsparungen ermöglicht.

Eine Ausgestaltung der Erfindung sieht vor, daß ein oder mehrere an sich bekannte und am Verschlußstück angebrachte Führungsnocken verdrehsichernd an einer oder mehreren im Gehäuse angebrachten Führungen anliegen. Hierbei können die Führungen als von Nocken oder Vorsprüngen umgriffene Leisten, eine Nocken oder dgl. aufnehmende Nut o.ä. ausgebildet sein.

Eine Ausgestaltung der Erfindung sieht vor, daß das Verschlußstück mit einet nicht drehenden Spindel versehen ist. Damit wird eine sichere Positionierung des Verschlußstückes innerhalb des Ventilsitzes sichergestellt.

Andere Ausgestaltungen der Erfindung, welche in den Ansprüchen 4 und 5 dargestellt sind, beschreiben verschiedene Arten der Verdrehsicherung für das Verschlußstück. So kann zum einen das Gehäuse eine innere, bspw. ovale, Kontur aufweisen, welche zwar eine Hubbewegung des unrunden Verschlußstückes zuläßt, aber gleichzeitig eine Verdrehung desselben unterbindet. Auch ist es möglich, zwischen Verschlußstück und Spindel eine Verdrehsicherung vorzusehen, beispielsweise durch einen Stift oder dgl.

Eine andere Ausgestaltung sieht vor, daß das Verschlußstück mit einem weichdichtenden Überzug versehen ist. Somit wird das Verschlußstück geschützt und eine zuverlässige Abdichtwirkung auch bei beispielsweise gegossenen Armaturengehäusen mit unbearbeiteten Sitzflächen erlangt.

Zum Schutz der Verbindung zwischen Spindel und Verschlußstück sieht eine weitere Ausgestaltung vor, daß der weichdichtende Überzug dichtend an der mit dem Verschlußstück verbundenen Spindel anliegt. Dies kann in einfacher Weise beispielsweise durch elastische Anlage an einem entsprechend ausgebildeten Spindelabschnitt erfolgen.

Nach einer anderen Ausgestaltung der Erfindung weist die dem Ventilsitz zugekehrte Seite des Verschlußstückes eine konvexe Wölbung auf, welche in Abhängigkeit von der Durchströmrichtung und in Verbindung mit der dem Ventilsitz begrenzenden Gehäusewand einen düsenförmigen oder diffusorförmigen Strömungsquerschnitt bildet. Diese Maßnahme dient der weiteren Verbesserung der Durchströmverhältnisse. Strömt hierbei das abzusperrende Medium der Unterseite des Verschlußstückes zu, so ergibt sich ein düsenförmiger Durchströmquerschnitt. Im umgekehrten Fall, bei dem das Medium der Oberseite des Verschlußstückes zuströmt, welche gleichzeitig die Verbindung mit der Spindel aufweist, ergibt sich ein diffusorförmig erweiternder Durchströmquerschnitt.

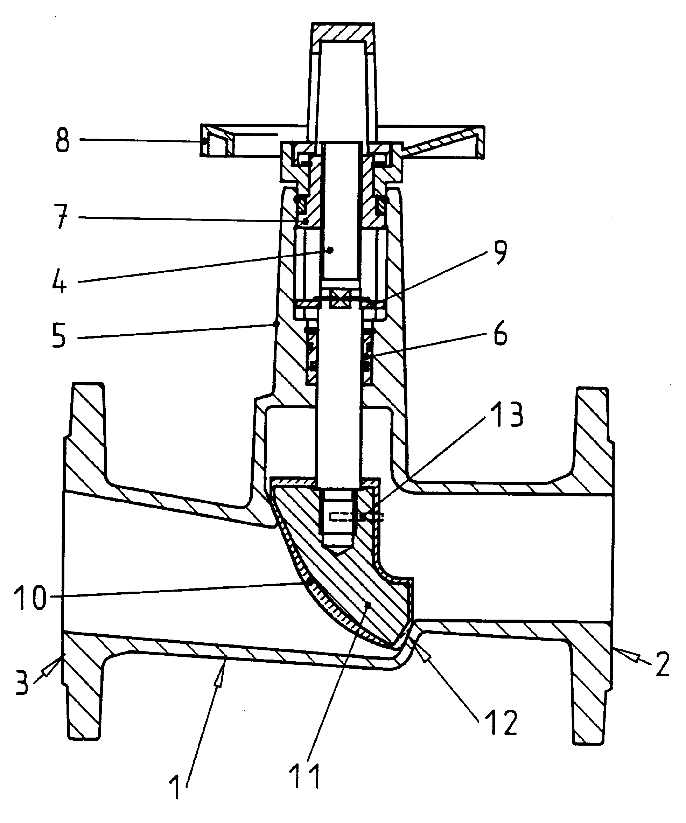

Ein Ausführungsbeispiel der Erfindung ist in der Zeichnung dargestellt und wird im folgenden näher beschrieben. Es zeigt einen Schnitt durch ein geschlossenes Hubventil. Das gezeigte Gehäuse (1) ist als einteilige Gußkonstruktion ausgebildet, welches nur eine spanabhebende Bearbeitung der Flansche (2, 3) und des hier eine nicht drehende Spindel (4) aufnehmenden Gehäusehalses (5) erfordert. Der Sitz des Ventils ist schräg zur Durchströmrichtung ausgebildet und vorzugsweise nicht bearbeitet. An der Spindel (4) liegt eine ein- oder mehrteilige Dichtungspatrone (6) an, die eine Abdichtung zwischen dem Gehäuseinnern und der Atmosphäre sicherstellt, wobei die Querkräfte von dieser Dichtungspatrone oder einem gesonderten Lager aufgenommen werden. Eine drehbar im Gehäusehals (5) gelagerte, von einem Handrad (8) bewegte Spindelmutter (7) bewirkt das Heben und Senken der Spindel (4). Letztere weist einen innerhalb des Gehäusehalses (5) geführten Arretierkloben (9) auf, mit dessen Hilfe eine Verdrehsicherung für die Spindel (4) erfolgt.

Für die Montage wird das mit einem weichdichtenden Überzug (10) versehene Verschlußstück (11) von der Seite des Flansches (2) her in das Gehäuse (1) eingeführt und in den Ventilsitz (12) eingelegt. Die Spindel (4) wird dann von außen in das Gehäuse (1) eingeführt und mit dem Verschlußstück (11) verbunden; im gezeigten Ausführungsbeispiel durch eine Schraubverbindung. Hierbei liegt der weichdichtende Überzug (10) dichtend an der Spindel (4) an und verhindert in zuverlässiger Weise den Zutritt des abzusperrenden Mediums zu der Verschlußstück-Spindel-Verbindung. Zwischen Spindel (4) und Verschlußstück (11) kann je nach Art der Verdrehsicherung auch ein als Verdrehsicherung (13) wirkender Stift angebracht werden. Andere und gebräuchliche Verdrehsicherungselemente sind ebenfalls möglich. Vor der Einbringung der Spindel (4) wird die Dichtungspatrone (6) im Gehäuse positioniert.

Anschließend können von außen der Arretierkloben (9) sowie die Spindelmutter (7) mit dem Handrad (8) angebracht werden.

Im übrigen kann derjenige Gehäuseteil, innerhalb dessen das Verschlußstück (11) die Hubbewegung ausführt, eine Bemessung aufweisen, welche wirkungsvoll eine Verdrehung des Verschlußstückes unterbindet. Entsprechend der unrunden Form des Verschlußstückes wird das Gehäuse einen ebenfalls unrunden Schacht aufweisen. Innerhalb desselben ist das Verschlußstück mit geringem seitlichem Spiel bewegbar. Anstelle oder zusätzlich sind auch noch die in den Unteransprüchen beschriebenen an sich bekannten Führungen anbringbar.

## Patentansprüche

1. Hubventil mit einem einteiligen Armaturengehäuse (1), dessen Verschlußstück (11) durch eine Anschlußöffnung (2) in das Gehäuse (1) einführbar und innerhalb desselben mit einer Spindel (4) montierbar ist, der druckbelastete Teil des Gehäuses (1) einteilig ausgebildet ist und mit einem schräg zur Durchströmrichtung angeordneten Ventilsitz (12) versehen ist, und das Verschlußstück (11) gegen Verdrehen gesichert ist, **dadurch gekennzeichnet**, daß der Ventilsitz (12) unrund, insbesondere oval, ausgebildet ist und ein damit zusammenwirkendes Verschlußstück (11) eine derart unrunde Dichtfläche aufweist, deren größte Erstreckung größer als die größte Erstreckung des der Montage dienenden Querschnitts der Anschlußöffnung (2) ist.

2. Hubventil nach Anspruch 1, dadurch gekennzeichnet, daß ein oder mehrere an sich bekannte und am Verschlußstück (11) angebrachte Führungsnocken verdrehsichernd an einem oder mehreren im Gehäuse angebrachten Führungen anliegen.

3. Hubventil nach Anspruch 1, dadurch gekennzeichnet, daß das Verschlußstück (11) mit einer nicht drehenden Spindel (4) versehen ist.

4. Hubventil nach den Ansprüchen 1 bis 3, dadurch gekennzeichnet, daß das Gehäuse (1) eine Verdrehung des Verschlußstückes (11) verhindernde Ausbildung aufweist.

5. Hubventil nach den Ansprüchen 1 bis 4, dadurch gekennzeichnet, daß zwischen Spindel (4) und Verschlußstück (11) eine Verdrehsicherung (13) angebracht ist.

6. Hubventil nach den Ansprüchen 1 bis 5, dadurch gekennzeichnet, daß das Verschlußstück (11) mit einem weichdichtenden Überzug (10) versehen ist.

7. Hubventil nach Anspruch 6, dadurch gekennzeichnet, daß der weichdichtende Überzug (10) dichtend an der mit dem Verschlußstück (11) verbundenen Spindel (4) anliegt.

8. Hubventil nach einem oder mehreren der Ansprüche 1 bis 7, dadurch gekennzeichnet, daß die dem Ventilsitz (12) zugekehrte Seite des Verschlußstückes (11) eine konvexe Wölbung aufweist, welche in Abhängigkeit von der Durchströmrichtung und in Verbindung mit der den Ventilsitz begrenzenden Gehäusewand einen düsenförmigen oder diffusorförmigen Strömungsquerschnitt bildet.

## Claims

1. A valve comprising a fitting housing (1) whose valve member (11) is able to be introduced through a connection opening (2) into the housing (1) and within the same is connected with a valve stem (4), the pressure-loaded part of the housing (1) is designed integrally and is furnished with a valve seat (12) arranged obliquely in relation to the direction of flow and the valve member (11) is locked to prevent turning, characterized in that the valve seat (12) is non-circular and is more particularly oval in design and a valve member (11) cooperating therewith has such a non-circular sealing surface, whose maximum extent is larger than the maximum extent of the cross section, serving for assembly, of the connection opening (2).

2. The valve as claimed in claim 1, characterized in that one or more inherently known guide projections arranged on the valve member (11) are in engagement with one or more guide means applied in the housing.

3. The valve as claimed in claim 1, characterized in that the valve member (11) is furnished with a non-rotary valve stem (4).

4. The valve as claimed in any one of the claims 1 through 3, characterized in that the housing (1) has a design preventing twisting of the valve member (11).

5. The valve as claimed in any one of the claims 1 through 4, characterized in that between the valve stem (4) and the valve member (11) a means (13) for preventing twisting is arranged.

6. The valve as claimed in any one of the claims 1 through 5, characterized in that the valve member (11) is provided with a softly sealing coating 10.

7. The valve as claimed in claim 6, characterized in that the softly sealing coating (10) is in sealing engagement with the valve stem (4) connected with the valve member (11).

8. The valve as claimed in any one or more of the claims 1 through 7, characterized in that the side, facing the valve seat (12), of the valve member (11) has a convex curvature, which in a manner dependent on the direction of flow and in connection with the housing wall delimiting valve seat constitutes a nozzle-shaped or diffusor-shaped orifice.

## Revendications

1. Soupape de levage avec un boîtier de robinetterie (1) en une pièce dont la pièce d'obturation (11) peut être introduite dans le boîtier (1) à travers une ouverture de raccordement (2) et peut être montée l'intérieur de celui-ci à l'aide d'une broche (4), la partie du boîtier (1) qui est soumise à la pression est en une seule pièce et munie d'un siège de soupape (12) placé en biais par rapport au sens de passage du flux et la pièce d'obturation (11) est protégée contre la torsion, caractérisée en ce que le siège de la soupape (12) n'est pas de forme ronde, est en particulier oval, et qu'une pièce d'obturation (11) agissant avec lui présente une surface d'étanchéité non ronde dont la plus grande longueur est supérieure à la plus grande mesure de la section de l'ouverture de raccordement (2) qui sert au montage.

2. Soupape de levage selon la revendication 1 caractérisée en ce qu'une ou plusieurs cames de guidage bien connues et montées sur le pièce d'obturation (11) sont accollées à un ou plusieurs guidages placés dans le boîtier tout en étant protégées contre la torsion.

3. Soupape de levage selon la revendication 1 caractérisée en ce que la pièce d'obturation (11) est munie d'une broche (4) non rotative.

4. Soupape de levage selon les revendications 1 à 3 caractérisée en ce que le boîtier (1) a une forme qui empêche la torsion de la pièce d'obturation (11).

5. Soupape de levage selon les revendications 1 à 4 caractérisée en ce qu'est placé entre la broche (4) et la pièce d'obturation (11) un dispositif de sécurité contre la torsion (13).

6. Soupape de levage selon les revendications 1 à 5 caractérisée en ce que la pièce d'obturation (11) est revêtue d'une garniture molle (10).

7. Soupape de levage selon les revendications 1 à 6 caractérisée en ce que la garniture molle (10) est accollée à la broche (4) liée à la pièce d'obturation (11) pour l'étanchéiser.

8. Soupape de levée selon une ou plusieurs des revendications 1 à 7 caractérisée en ce que la face de la pièce d'obturation (11) qui est dirigée vers le siège de la soupape (12) présente une courbure convexe qui forme selon le sens du passage du flux et en liaison avec la paroi du boîtier qui limite le siège de la soupape une section transversale du flux en forme de tuyère ou de diffuseur.
